# EUROPEAN PATENT SPECIFICATION

(11) **EP 1 612 094 B1**
(45) Date of publication and mention of the grant of the patent: **07.10.2009**
(21) Application number: 04015194.6
(22) Date of filing: 29.06.2004
(51) Int. Cl.: B60N 2/42, B60N 2/427, B60N 2/06, B60N 2/22

(54) **Vehicle seat arrangement**
Fahrzeugsitzanordnung
Agencement de siège de véhicules

(43) Date of publication of application: 04.01.2006
(73) Proprietor: Ford Global Technologies, LLC, Dearborn, MI 48126 (US)
(72) Inventor: Alexandersson, Peter, 434 97 Kungsbacka (SE); Sodling, Urban, 430 93 Hälsö Göteborg (SE)
(74) Representative: Engstrand, Maria Linnéa

(56) References cited:
- US-A- 3 357 736
- US-A- 5 460 427

## Description

### Field of the invention

The invention relates to the field of vehicle seat arrangements to which a seat belt is arranged, i. e. belt-in-seat arrangements.

### Background of the invention

Construction of vehicle seat arrangements, in particular in cars, is subject to a number of considerations regarding different aspects of the vehicle seat. These different aspects include, but are not limited to, e.g. safety aspects, comfort aspects, manufacturing and recycling aspects.

To meet the various requirements on vehicle seats, a number of different constructions have been proposed.

For example, US 5 232 264 (Hoshihara) discloses a seat arrangement having a belt-in-seat, i. e. the seat belt has all anchor points attached to the seat itself, and not, as in conventional seats, having at least one anchor point attached to the inner wall of the vehicle compartment. Further, the vehicle seat arrangement has a seat cushion portion and a seat back portion and comprises a main frame including a main back frame for the seat back portion and a main cushion frame for the seat cushion portion which is connected to the main back frame. It also comprises a sub frame including a sub back frame for the seat back portion and a sub cushion frame for the seat cushion portion that is pivotally connected to the sub back frame. The sub frame has a seat cover on which an occupant of the seat sits. The vehicle seat further includes a raising and lowering device provided at the main frame and operatively connected to the sub frame to raise or lower the sub frame with respect to the main frame secured to the vehicle body. The belt is arranged to the main frame, with two anchor positions at each side of the main cushion frame, and the third anchor position at the shoulder portion of the main back frame. A reinforcement member extends across the main back frame, which seems to be intended to enhance the strength of the construction.

The seat arrangement of US 5 232 264 is intended to be adjustable for differently sized occupants by adjusting the position of the sub frame in relation to the main frame, which is secured to the vehicle body.

Another example of a prior art vehicle seat is disclosed in US 5 071 190 (Tame) describing a seat arrangement being designed to keep the head of an occupant, in particular the driver, in a position ensuring good visibility. The head rest of the arrangement is positioned at an optimal location for visibility by a vehicle occupant. The seat cushion and seat back can be adjusted vertically to position the occupant's head in front of the head rest so that the occupant's eyes are at the optimum viewing height. Further, the seat back is pivotably connected to the seat cushion, so that it may be rotated to a reclined position or to a dump position enabling easier access to the area behind the seat assembly.

Another property that has been proposed to be advantageous with a vehicle arrangement is to provide protection for the occupant in case of a crash by automatically altering the position of the seat in case of a crash, so that the occupant is moved to a different position than the normal driving position.

US 2 102 979 describes such a vehicle seat being suspended by two pairs of rollers running in opposite guide rails. The rails are inclined downwardly and have a curvilinear rise. Upon impact, the momentum of the occupant carries the seat forward against the tension of springs. The first rollers then travel down the decline and the second pair of rollers progress up the curved rise in the rails. This lowers the back and tips up the front of the seat to swing the seat into a position in which the raised forward portion of the seat restrains the occupant from being hurled forward by the force of momentum. In addition, the lowering of the back of the seat lowers the centre of gravity and contributes to retaining the occupant in place on the seat.

### Summary of the invention

The object of the invention is to provide an enhanced vehicle seat arrangement. Preferably, the vehicle seat should offer improvements as regards at least one of the above-mentioned aspects.

This object is achieved by a vehicle seat arrangement in accordance with claim 1 below.

In accordance with the invention there is provided a vehicle seat arrangement comprising a seating part having a seat cushion and a back cushion for supporting the seat and back of an occupant, and a seat belt having anchor points, all of which being associated with the seating part. The seating part is pivotably arranged in relation to a base part, and the base part is arranged to be horizontally movable in relation to the vehicle, wherein the pivoting between the seating part and the base part, and the horizontal movement of the base part in relation to the vehicle are independently controllable for enabling adjustment of the seating position under normal driving conditions, and for controlled horizontal movement and/or pivoting during absorption of energy in a crash situation.

Preferably a first energy absorber and linear actuator is arranged to operate upon the base part so as to control the horizontal movement thereof. Advantageously, a second energy absorber and linear actuator may be arranged between the base part and the seating part so as to control the pivoting of the seating part in relation to the base part.

With the term "a energy absorber and linear actuator" is to be understood that the energy absorber and linear actuator may be formed as one single device, which is preferred. However, it is also possible to arrange "a energy absorber and linear actuator" as e.g. two separate devices, as long as they fulfil the intended functions.

The first energy absorber and linear actuator and the second energy absorber and linear actuator may be arranged substantially in parallel.

Advantageously, the first and/or second energy absorber and linear actuator are locked in position after absorption of energy, allowing movement/pivoting in one direction only following a crash situation.

The base part may be horizontally movable in rails extending on each side of the base part. The rails may advantageously be formed as grooves in walls provided on each side of the base part.

The base part is preferably a unitary member.

The seat cushion may be pivotable in relation to the back cushion. In this case, an actuator may be arranged between the base part and the seat cushion so as to control adjustment of the angle formed between the seat cushion and the back cushion. This actuator may also be combined with an energy absorber.

The base part is advantageously arranged so as to be movable in the rails in a forward direction and in a backward direction in case of a backward or rearward impact, respectively.

Further, the rails may have at least one slanted portion extending in a horizontal and in a vertical direction so that movement along the portion of the rails result in a horizontal and a vertical movement of the base part.

Alternatively, the rails may be extending in a substantially horizontal direction only.

The back cushion may advantageously be arranged in a frame shaped structure extending around the back cushion, so as to allow the back cushion to at least partly pass through the frame in an impact situation. The vehicle seat arrangement may then comprise a neck support being arrangeable in a fixed horizontal relationship to the seat part.

Forward and backward as used herein relate to directions towards the forward and backward ends, respectively, of the seat at which the system is arranged. An occupant being seated in the seat will thus always face the forward direction in relation to the seat. Horizontal as used herein relates to directions in a plane parallel to a base floor of the vehicle, which will indeed be horizontal if the vehicle is situated on a truly horizontal ground. Vertical relates to directions normal to the plane including the horizontal directions, which will indeed be vertical if the vehicle is situated on a truly horizontal ground.

The illustrated embodiments show seats that face towards the front of the vehicle, i. e. forward in relation to the seat is towards the front of the vehicle, However, it is apparent that the invention is equally applicable for a seat being directed otherwise in the vehicle, e.g. a seat being directed so that an occupant will look towards the rear of the vehicle. References made to a collision from the front or from the back are always made with respect to the direction of the seat, regardless of its position in the vehicle.

Additional features and advantages of the invention will appear more clearly from the following detailed description of some preferred embodiments of the invention, which is given by way of non-limiting example only and with reference to the accompanying drawings.

### Brief description of the accompanying drawings

Fig. 1 is a perspective view of a first embodiment of a vehicle seat arrangement according to the invention.
Fig. 2 is a perspective view of the embodiment of Fig. 1, wherein the seat cushion has been removed for clarity purposes.
Fig. 3 is a perspective view of the embodiment of Figs 1 and 2, wherein also the back cushion and neck support have been removed for clarity purposes.
Figs 4a to 4c illustrate the behaviour of the embodiment of a vehicle seat arrangement of Fig 1 in a frontal collision.
Figs 5a to 5c illustrate the behaviour of the embodiment of a vehicle seat arrangement of Fig 1 in a collision from behind.
Fig. 6 is a perspective view of a second embodiment of a vehicle seat arrangement according to the invention.
Fig. 7 is a perspective view of the embodiment of Fig. 6, wherein the seat cushion, back cushion and neck support have been removed for clarity purposes.
Fig. 8 is an illustration of a part of the construction of the embodiment of Fig. 6. Figs 9a to 9c illustrate the behaviour of the embodiment of Fig. 6 in a frontal collision.
Figs 10a to 10c illustrate the behaviour of the embodiment of Fig. 6 in a collision from behind.

### Detailed description of preferred embodiments of the invention

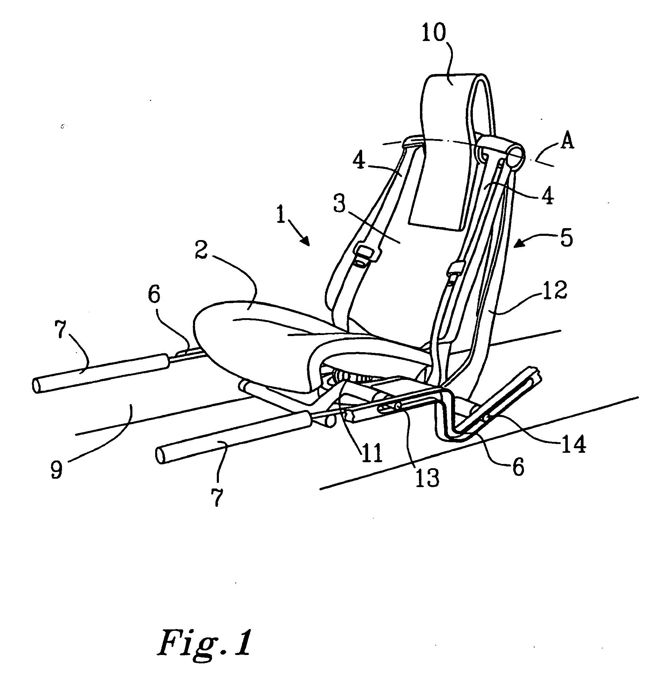

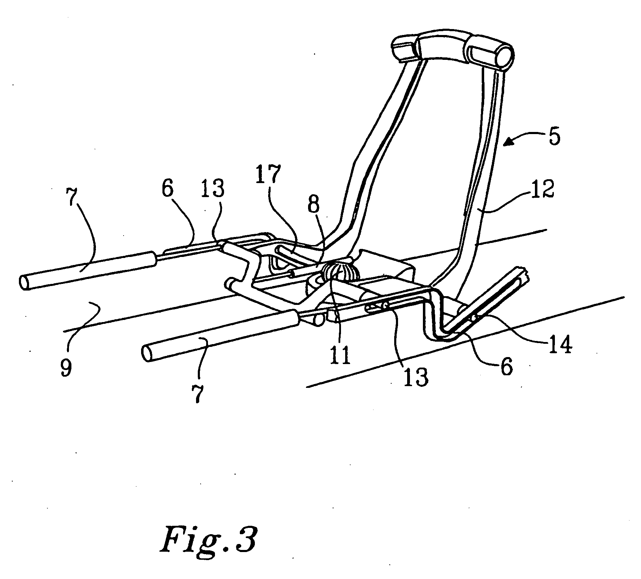

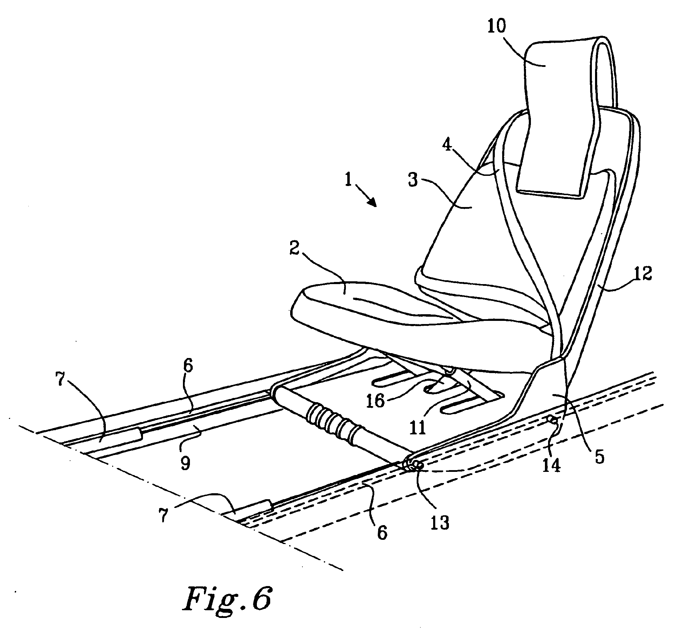

Features and advantages of the invention will now be described in relation to two exemplary embodiments, a first embodiment being illustrated in Figs 1-5, and a second embodiment being illustrated in Figs 6-10.

The vehicle seat arrangements according to both embodiments comprise a seating part 1 having a seat cushion 2 and a back cushion 3 for supporting the seat and back of an occupant, and a seat belt 4 having anchor points, all of which are associated with the seating part 1. The arrangement is thus a so-called belt-in-seat arrangement.

In contrast, conventional three-point seat belts have two anchor points at each side of the lap of an occupant, which anchor points usually follow the position of the seat when the seat is adjusted for a particular occupant. The third anchor point, from which the belt is fed, is however arranged on the B-post of the vehicle compartment, and is seldom adjustable in accordance with any adjustment of the seat. Accordingly, a conventional seat belt might function somewhat differently when the seat is in e.g. a forwardmost position than when the seat is in its backwardmost position.

In a belt-in seat construction, all anchor points of the belt are fixed in relation to the seat itself rather than to the inner wall of the compartment of the vehicle. In this way, the belt will have the same configuration regardless of the position of the seat.

In the first embodiment (Figs 1-5), the illustrated belt-in-seat is a four anchor point belt 4, whereas in the second embodiment (Figs 6-10), the illustrated belt-in-seat is a three anchor point belt 4. Any configuration could actually be used for the belt-in-seat, as long as all anchor points are fixed in relation to the seat. However, it is preferred that it includes both a lap belt portion and a shoulder portion, so that the belt extends around the pelvis and the upper body of an occupant.

For enabling adjustment between different selectable positions of the vehicle arrangement, the seating part 1 is pivotably arranged in relation to a base part 5, and the base part 5 is arranged to be horizontally movable in plane in relation to the vehicle.

Preferably, the base part 5 is movably arranged in rails 6 extending on each side of the base part 5.

With the term "seating part" is to be understood a structure including the seat cushion and the back cushion, allowing a person to be seated in the seat arrangement. The seating part could also comprise means holding the seat cushion and the back cushion together. The seating part being pivotably arranged in relation to the base part 5 thus means that the seat cushion and back cushion are pivotable in relation to the base part 5 as one single unit. This does not exclude that the seat cushion and/or the back cushion may also be adjustable in relation to each other. Accordingly, pivoting the seating part in relation to the base part 5 results in similar pivoting of the back cushion and the seat cushion in relation to the base part.

The base part 5 being horizontally movable means that it should be movable in at least a horizontal direction. However, it does not exclude that the base part could be movable also in a vertical direction. Preferably, the base part 5 may be movable at least in a forward-backward direction in relation to the seat.

In the first embodiment shown in Figs. 1-5, the seating part 1 comprises the seat cushion 2 and the back cushion 3, which are interconnected at the lower part of the back cushion 3. The seating part 1 is pivotally connected to the base part 5 via pivot axis A at the upper end of the back cushion 3. Pivoting the seating part 1 in relation to the base part 5 results in pivoting of the back cushion 3 and the seat cushion 2 in relation to the base part 5 without any altering of e.g. the angle between the seat cushion 2 and the back cushion 3. The base part 5 extends from the rails 6 in the vicinity of the floor of the vehicle, to a position adjacent to the upper end of the back cushion 3. The seat part 1 is pivotally connected to the base part 5 via pivot axis A at the upper end (close to the neck portion) of the back cushion 3 and the upper portion of the base part 5. Other embodiments are conceivable in which the seating part comprises additional devices, such as an additional frame, or an intermediate structure extending between the back cushion and the seat cushion. The base part 5 should preferably be made as a unitary member, so as to facilitate a construction providing the necessary strength to the seat arrangement. The particular construction of the embodiment of Fig. 1 has the advantage that it enables a light construction using relatively little material, and still fulfilling the requirements as regards its strength. Further, the construction is advantageous in combination with other features as will be described below.

In the second embodiment, shown in Figs 6-10, the seating part 1 comprises a seat cushion 2, a back cushion 3, and a frame structure 12 in which the seat cushion 2 and the back cushion 3 are arranged. The seating part 1 is pivotally connected to the base part 5. In the second embodiment, the base part 5 does not extend as far above the rails 6 as in the first embodiment. Instead, the seating part 1 is pivotally connected to the base part via a lower end of the frame 12, in the vicinity of the seat cushion 2, and the upper portion of the base part 5. Thus, pivoting the frame 12 affects the back cushion 3 and the seat cushion 2 simultaneously. This construction may also be made light and using relatively little material, while fulfilling the strength requirements. Also, this construction has the advantage that it may be adapted to allow easy folding of the seat arrangement to a storage position in which the seat takes up a relatively small space in the vehicle compartment. Further, the construction may advantageously be combined with other features as will be described below.

The general construction with the horizontally movable base part 5 and the seating part 1 being pivotable in relation thereto which is used in both of the illustrated embodiments allows for two different, independent adjustments of the seat arrangement to be made, namely that of the horizontal position of the base part 5 and that of the angular position of the seating part 1 in relation to the base part 5. This enables a variety of adjustment possibilities of the seat arrangement so as to correspond to the needs and wishes of different occupants. In particular, a forward-backward adjustment may be performed by adjusting the horizontal position of the base part 5, whereas a comfort adjustment of the seat angle may be made by adjusting the angle between the base part 5 and the seating part 1. The arrangement with the movable base part 5 and the seat part 1 being pivotable in relation thereto is particularly advantageous in connection with belt-in-seat arrangements since it provides a possibility of making the seat arrangement sufficiently strong to withstand the forces to which it might be subject, and at the same time providing a wide range of adjustment possibilities.

In contrast, previous belt-in-seat arrangements are not adjustable in a forward-backward direction like conventional arrangements because, in a crash situation, the seat arrangement must withstand large forces from the belt that in conventional arrangements are taken up by the inner wall of the vehicle compartment, where the third anchor point is arranged. Moving the third anchor point to the seat part of the seat arrangement fundamentally changes the requirements for strength of the entire seat arrangement. Inadequate strength might cause the seat to fold in an unwanted manner in a crash situation, if the forces to which the back portion of the seat arrangement is subject results in the back portion collapsing or moving forward towards the seat portion. The construction with a base part 5 and a seating part 1 is particularly suitable to diminish these problems, since the loads from the belt 4 on the back portion of the seat will be transmitted so as to result in a first pivoting between the seat part and the base part, and a second movement of the base part in the rails. Thus the effect of the increased load may be partly dealt with at a seat part - base part level, and partly at the base part - rail level.

To this end, a first energy absorber 7 may preferably be arranged in relation to the base part 5 so as to allow movement of the base part 5 in the rails 6 during absorption of energy in case of a crash situation.

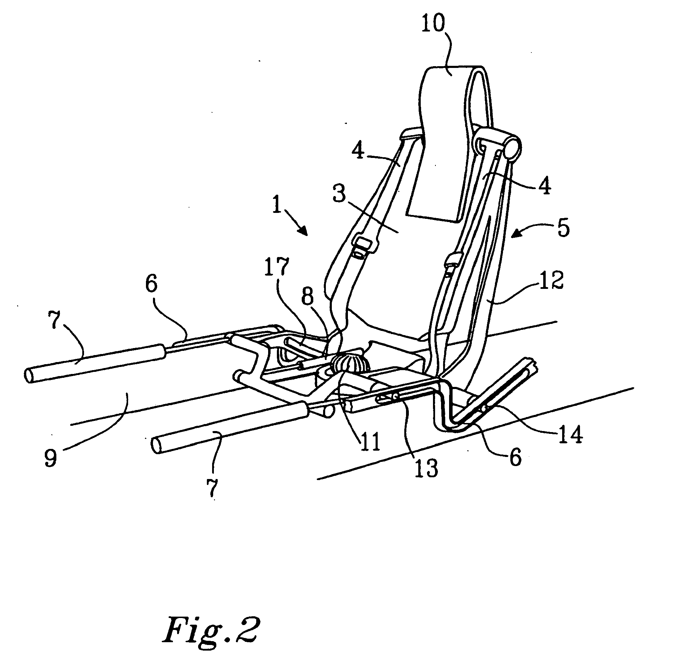

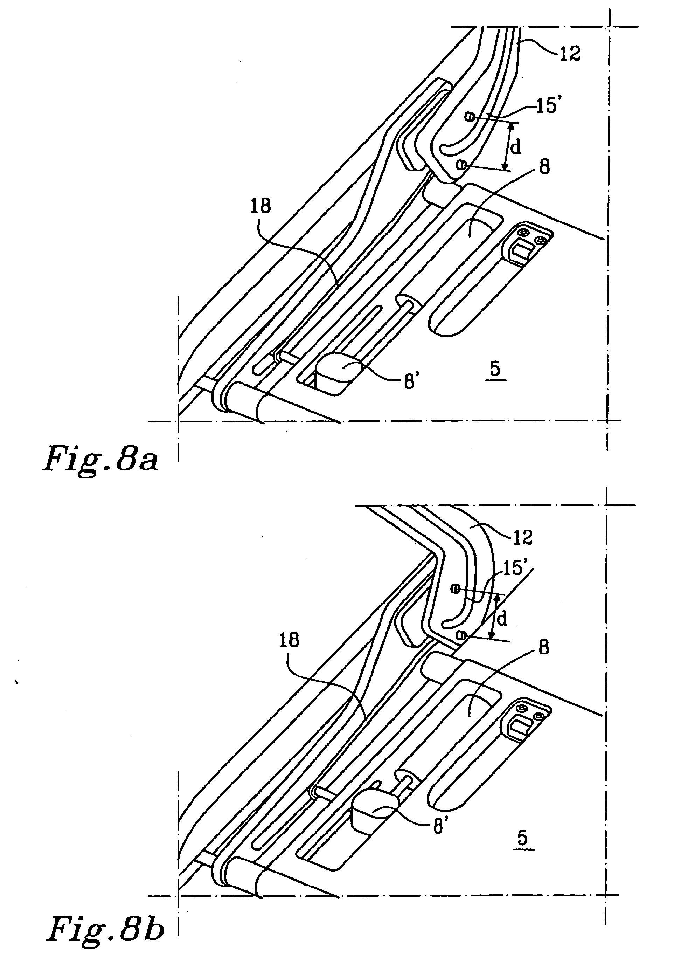

A second energy absorber 8 (best seen in Fig. 2 and Fig. 8) may also be arranged between the base part 5 and the seating part 1 so as to allow pivoting of the seating part 1 in relation to the base part 5 during absorption of energy in case of a crash situation.

Thus, in case of a crash, energy may be absorbed by the first energy absorber 7 between the base part 5 and the rails 6, and by the second energy absorber 8 between the base part 5 and the seating part 1. Accordingly, a part of the loads to which the seat arrangement is subject in case of a crash, being particularly large due to the seat-in-belt construction, may be absorbed during movement of the base part 5 and the seating part 1. This diminishes the strain to which the base part 5 and the seating part 1 themselves are subject, and thus lowers the requirement of strength of these parts.

The load absorbing effect is enhanced in that the first energy absorber 7 and the second energy absorber 8 are arranged so as to co-operate when absorbing energy. In this case, they are arranged in parallel, and in a forward-backward direction.

Advantageously, both energy absorbers 7, 8 may also be linear actuators, which are used to adjust the position of the seat arrangements according to the occupant's needs. The energy absorbers/linear actuators may be controlled in any appropriate way, such as by means of a processor for electronical control of the position of the seat arrangement. Suitable energy absorbers/linear actuators might be of the type having an extendible piston enabling the energy absorber/linear actuator to expand and to retract.

The base part 5 is arranged so as to be movable in the rails in a forward direction and in a backward direction in case of a backward or forward impact, respectively. Accordingly, the extreme positions between which the seat arrangement may be adjusted in order to adapt to different occupants should preferably not be located at the extreme ends of the rails. Instead, it is preferred that there are portions of the rails extending in a forward and in a backward direction from the extreme positions of the seat arrangement, so that, regardless of the position selected by the occupant, it is possible for the seat arrangement to move further forward or backward in case of a crash situation, and thereby to allow forces resulting from the impact to be taken up by the energy absorber.

Advantageously, the energy absorbers 7, 8 should be arranged to be locked after energy absorption in a crash situation, i. e. after sliding movement of the base part 5 and energy absorption in the first energy absorber 7, and/or pivoting of the seat part 1 and energy absorption in the second energy absorber 8, the absorbers 7, 8 should inhibit further movement of the base part 5 and/or the seating part 1. In this way, the movement of the seating part 1 in a crash situation may be controlled so as to occur in substantially one direction only. This spares the occupant from moving back and forth several times during the duration of the crash and accordingly inhibits injuries such as whip lash injuries that may be associated with the secondary movements of the seat arrangement.

In the first embodiment (Figs 1 to 5), the first energy absorber 7 being also a linear actuator is arranged along the rails 6 and forward of the base part 5. The second energy absorber 8 is arranged in between the base part 5 and the extension of the back cushion 3. The extension of the back cushion 3 is provided with a runner arranged in an arcuate track 17, whereby the angular position of the back cushion 3 in relation to the frame 5 is controlled.

In the second embodiment (Figs 6 to 10), the first energy absorber 7 being also a linear actuator is arranged along the rails 6 and forward of the base part 5. The second energy absorber 8, being likewise a linear actuator, is arranged in a recess in the base part 5. The second energy absorber 8 comprises an extendible piston 8' (see Figs 8a, 8b) which is connected to a connecting arm 18 via a pin. The arm 18 is in turn connected to the frame 12 at a distance from the pivotal connection between the frame 12 and the base part 5. The distance will act as a lever so that the movement of the piston 8' of the energy absorber 8 transmitted via the connecting arm 18 will cause the frame 12 to pivot in relation to the base part 5.

Thus, when adjusting the angle of the seating part 1 in relation to the base part 5 in the second embodiment, the linear actuator/energy absorber 8 will act via the arm 18 and above-mentioned distance. In a crash situation, wherein the seating part 1 will tend to pivot in relation to the base part 5 due to forces from the impact, the same arrangement will enable the angle between the seating part 1 and the base part 5 to be controlled during absorption of energy using the energy absorber/linear actuator 8. The arrangement with the distance acting as a lever is particularly useful in a crash situation since it the resistance to the pivoting of the seating part 1 created by the energy absorber 8 will act via the distance-lever thus amplifying its effect. In the illustrated embodiment, the linear actuator/energy absorber 8 is located in a forward-backward direction and so as to extend the piston 8' when the angle between the base part 5 and the seating part 1 is increased, and retract the piston 8' when the angle between the base part and the seating part 1 is decreased. With this arrangement, the energy absorber 8 is particularly suitable for taking up energy during a forward impact, since energy absorption is most efficient when the absorber 8 retracts the piston 8'. This is advantageous since the forces on the seating part 1 will be particularly large in a forward crash, due to the loads from the occupant acting on the belt-in-seat.

The rails 6 may be formed as grooves in walls 9 provided on each side of the base part 5. Rails 6 formed by grooves in walls will enable constructions providing greater strength than e. g. the generally used type of rails for car seats being separate bar constructions extending from the floor of the vehicle. The greater strength is advantageous due to the previously mentioned increased forces on the seat suspension arrangement when using a belt-in-seat rather than a conventional belt arrangement.

In addition, the formation of the rails 6 in side walls 9 of the vehicle will contribute to a clean compartment area. The term "side walls" encompasses, but is not restricted to the actual side walls of the vehicle compartment. A side wall may also be made of a wall portion being especially arranged for the purpose of providing a rail 6, and which could extend only slightly above said rail 6.

Further, the base part 5 may preferably be arranged in the rails 6 by means of two pairs of runners 13, 14, so as to provide stability to the seat.

In the first embodiment of Figs 1 to 5, the rails 6 each comprises a straight portion and a slanted portion, wherein a first pair of runners 13 is arranged in the straight portions of the rails and a second pair of runners 14 is arranged in the slanted portions of the rails, such that movement along the rails 6 results in pivoting of the base part 5. Thus, horizontal action of the actuators 7 may be translated into vertical movement of the base part 5.

This arrangement is particularly useful when combined with the feature that the seat part 1 comprising the back cushion 3 is pivotably suspended at the base part 5. Motion of the base part 5 in the rail will cause it to pivot, resulting in the back cushion 3 pivoting in relation to the base part 5, while maintaining its angular position in relation to the vehicle as a whole. However, the construction may be made so that the pivot axis A is moved vertically during said pivot of the base part 5. Accordingly, the pivot axis A may be moved vertically but not horizontally as a result of the displacement of the frame in the rails. The movement of the frame may be accomplished by actuators acting only in a horizontal direction, for example on said first pair of runners 13. Thus, horizontal movement of the first pair of runners 13 results in vertical movement of the pivot axis A, and thus of the entire seating part 1. In this way, the height of the seat part 1 in relation to the vehicle may be adjusted to different occupants.

This arrangement results in that horizontal movement of the base part 5 effects a pivoting of the base part 5, since the vertical relationship between the first 13 and the second 14 pair of runners is altered. In the first embodiment, the rails 6 and the base part 5 are so adapted, that said pivoting occurs generally around the pivot axis A of the base part 5. Accordingly, horizontal movement of the runners 13, 14 in the rails 6 is translated to a vertical movement only of the pivot axis A. Thus, the arrangement including the slanted rails 6 and the frame 5 is particularly suitable for accomplishing vertical movement of the pivot axis A.

The rails 6 further comprise a vertical portion, being positioned in between a straight horizontal portion and a slanting portion, wherein the vertical portion acts as a stop for the movement of the base part during normal use. However, one could envisage that the base part could be arranged to pass the vertical portion during special circumstances, such as for reaching a storage position.

In the second embodiment, the rails 6 are straight and substantially horizontal. The base part 5 is associated with two pairs of runners 13 and 14 that are running in the rails 6. Thus the horizontal movement of the runners will in this case not result in any pivoting or height adjustment of the seating part 1.

In both embodiments, the seat cushion 2 may be pivotable in relation to the back cushion 3 and an actuator 11 be arranged between the base part 5 and the seat cushion 2 so as to adjust the angle between the seat cushion and the back cushion 1. With this arrangement, the actuator 11 will move along with the base part 5, thus ensuring that setting of the position of the seat cushion 2 is independent of the position in a forward-backward direction of the base part 5. Additionally, the first and second energy absorbers 7, 8 and the actuator 11 will be arranged in relation to the base part 5, which may be advantageous for controlling of the energy absorbers/actuators.

In the first embodiment, the actuator 11 is an expansible bellows device, being situated under the seat cushion 2, and in connection to the base part 5.

In the second embodiment, the actuator 11 is a linear actuator arranged in between the seat cushion 2 and the base part 5.

The back cushion 3 and the seat cushion 2, which make up the seat part 1, are pivotable around the pivot axis A, which is why the arrangement may advantageously be arranged so that the pivot between the back cushion 3 and the base part 5 corresponds to the tilt of the base part 5 due to the vertical adjustment. Accordingly, the seating angle of the seating part 1 may be kept constant during vertical adjustment of the pivot axis P to adjust to occupants of different heights.

Regardless whether the seat arrangement comprises a base part 5 arranged in rails as described above or not, the seating part 1 of a belt-in-seat vehicle seat arrangement may advantageously have the back cushion 3 arranged in a frame shaped structure 12 extending around the back cushion 3, so as to allow the back cushion 3 to at least partly pass through the frame shaped structure 12 in an impact situation.

This form of suspension has the advantage that it enables a construction using relatively little material for the frame, thus providing possibilities to construct seats having relatively low weight. Another advantage is that, in case of a collision from a backward direction, the back support portion may move backwardly in relation to the frame together with the upper body of the occupant, perhaps moving into it and even slightly through it. The back support portion will then absorb some energy of the collision.

The frame arrangement is particularly useful if it is combined with a neck support for supporting the neck of an occupant. In case of a collision from a backward direction, when the back support portion is moved backwardly in relation to the frame together with the upper body of the occupant, the neck support will remain fixed in relation to the frame. This means that the occupant's head will be kept in its original position, while her/his upper body is allowed to move backwardly. This results in a forward tilting of the head of the occupant, which is a position that has been found to be advantageous in order to reduce whip-lash injuries.

In the first embodiment, the frame 12 is formed by the base part 5, which extends from the rails 6 and upwardly to the pivot axis A at the neck portion of the occupant. Other alternatives are possible, as will be described in relation to the second embodiment. This arrangement is however particularly suitable for combination with features enabling a fixed head position of an occupant, which will be described in the following.

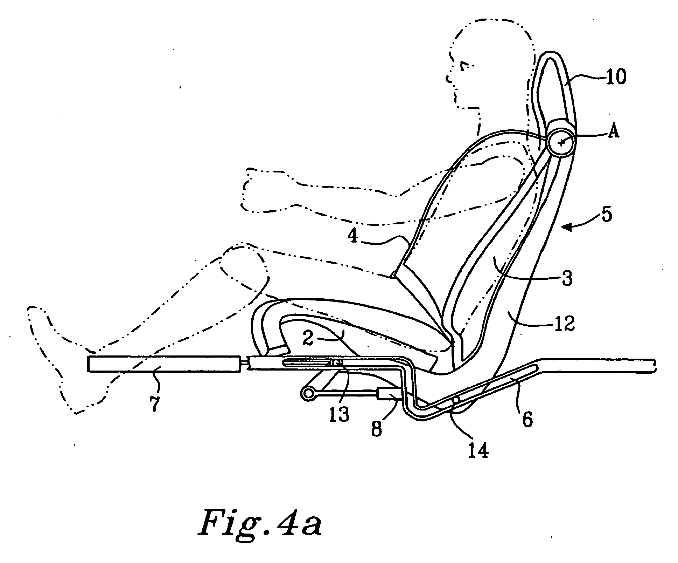

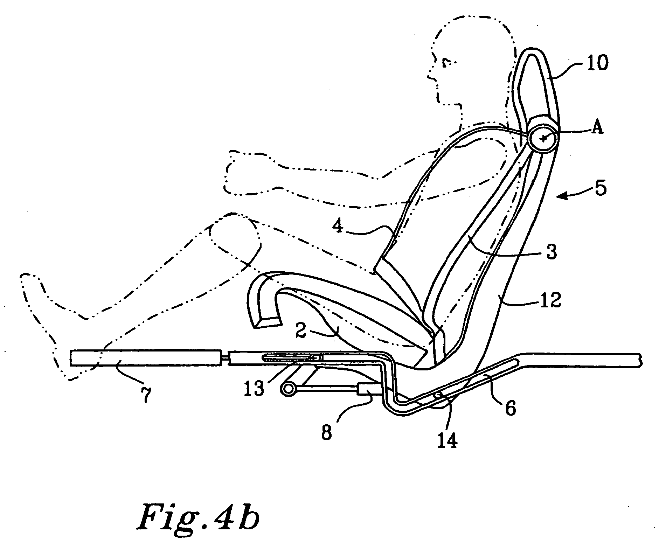

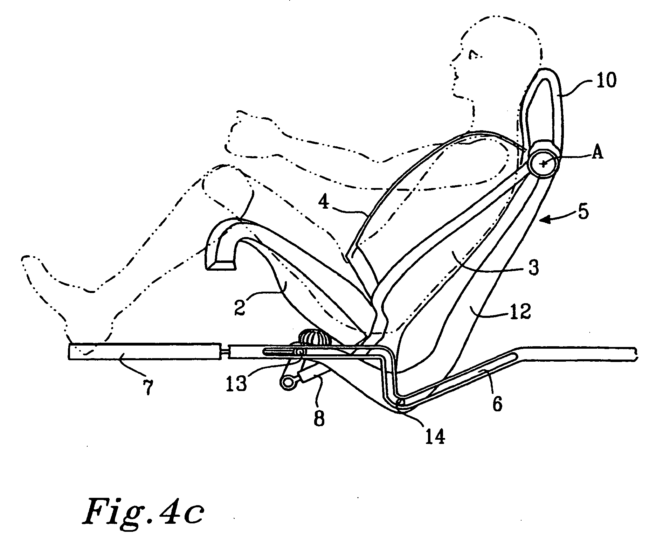

Turning now to Figs 4a to 4c, the behaviour of the first embodiment of a vehicle seat arrangement during a frontal crash is illustrated. In Fig. 4a, the vehicle arrangement comprising the seat part 1 and the base part 5 is depicted in an initial position before the crash occurs. An occupant is seated, supported by the seat cushion 2 and the back cushion 3 of the seat part 1, and restrained by the belt-in-seat 4. The base part 5 is arranged in the rails 6, so that its first runners 13 are arranged in the straight portions of the rails 6 and its second runners 14 are arranged in the slanted portions of the rails 6. In normal use, as in Fig. 4a, the seat part may be adjusted between different comfort positions in that the angle between the back cushion 3 and the base part 5 may be adjusted using the second energy absorber/linear actuator 8. Also, the angle between the seat cushion 2 and the back cushion 3 may be adjusted using the adjustor 11 (not shown in Figs 4-5, but visible in Figs 1 to 3). Further, the seat arrangement may be moved in a forward-backward direction in the rails 6. Such a movement will cause the base part 5 to pivot, since the vertical distance between the first runners 13 and the second runners 14 will be changed.

When a frontal impact occurs, the occupant will move forwardly in relation to the seat arrangement as seen in Fig. 4b, and will be held in place in the seat part 1 by the belt-in-seat 4 which is then subject to considerable load. The load from the belt 4 will cause the seat part 1 to pivot forwardly in relation to the base part 5, increasing the angle between the back cushion 3 and the base part 5. The second energy absorber 8 will be compressed, and thus absorb energy from the impact. As the frontal collision proceeds, the base part 5 will move forwardly in the rails 6, causing the base part 5 to tilt backwardly. The first energy absorber 7 is compressed by the forward movement of the base part 5 and thus absorbs further energy from the crash. As is clear from Fig. 4c, the angle between the base part 5 and the seat part 1 is further increased. The seat part 1 has assumed a backwardly tilted position, which is advantageous for the safety of the occupant since it diminishes the risk that the occupant slides forwardly in the seat (submarining).

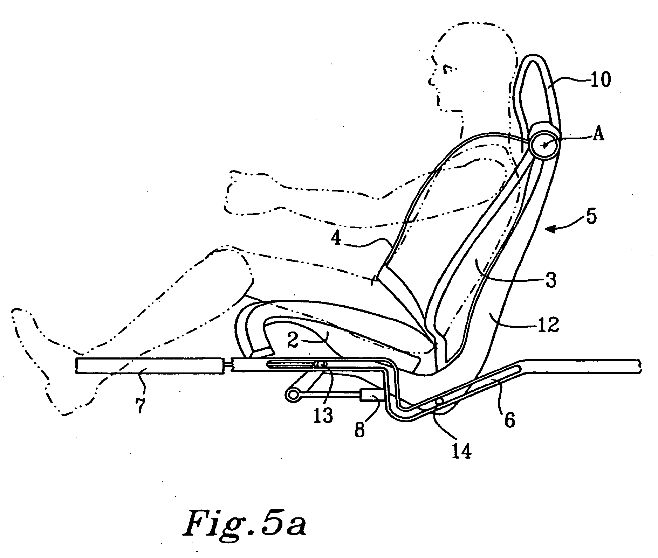

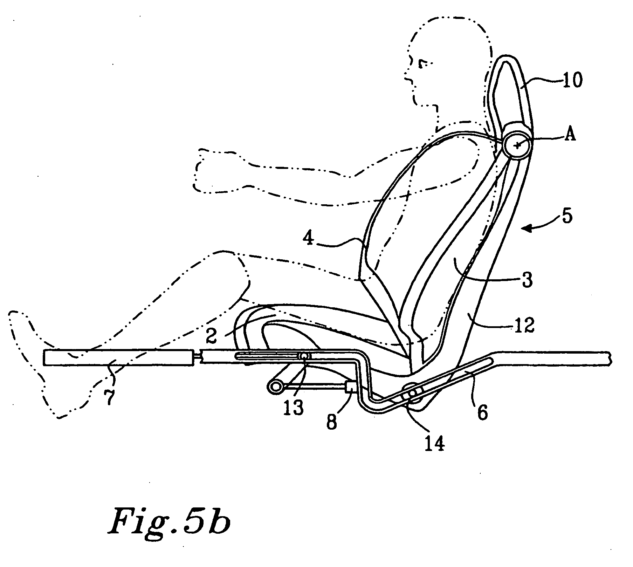

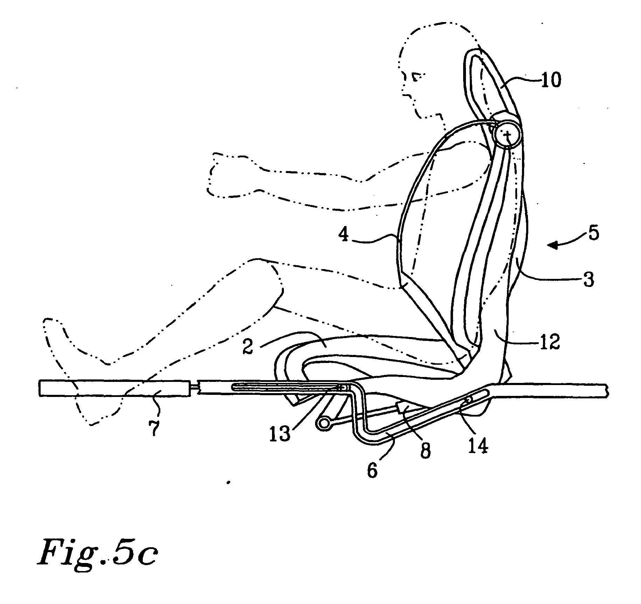

In case of a rear collision, the initial position of the seat arrangement is similar to that described in relation to the frontal collision above. The rear collision will cause the seat part 1 to pivot backwardly in relation to the base part 5, thus diminishing the angle between the seat part 1 and the base part 5 as seen in Fig. 5b. The second energy absorber 8 is extended, and thus absorbs energy from the impact. As the rear collision proceeds, the back cushion 3 of the seat part 1 will move further backward in relation to the base part 5, and at least partly through the frame 12 formed by the base part 5, as is clear from Fig. 5c. The neck support 10 is fixed in relation to the frame 5, which results in that the head of the occupant meets the neck support 10 as the back of the occupant moves partly through the frame 12 together with the back support 3. Thus the occupant is brought to a position which is favourable for avoiding whip-lash injuries. Further, the base part 5 is moved backwards in the rails 6. Due to the slanted form of the rails 6, the base part 5 will be tilted forwardly. Simultaneously, the first energy absorbers 7 will be extended, and thereby absorb energy from the impact.

In the second embodiment, the frame 12 is a separate device forming part of the seat part 1. To ensure a proper position of the head of the occupant to the neck support, and thus to the belt-in-seat, the seat cushion 2 is movable by parallel displacement so as to adjust the distance between the seat cushion 2 and the neck support 10. Accordingly, occupants of most heights may be properly positioned in the seat, meaning that the belt-in-seat will be properly positioned in relation to the occupant, and in addition that each occupant may be seated in a position allowing for good visibility.

In the second embodiment, the seat cushion 2 and the back cushion 3 is movable in tracks 15 provided along the opposing inner sides of the frame 12. A height adjustment actuator 16 is arranged to displace the seat cushion 2 in the track 15. The height adjustment actuator 16 is arranged in between the base part 5 and the seat cushion 2, so that its control mechanisms may act via the base part 5.

The tracks 15 extend along the major part of the inner sides of the frame 12, whereby a wide range of adjustments are possible. The positions in which the seat cushion 2 is closest to the neck support 10 might be suitable for children.

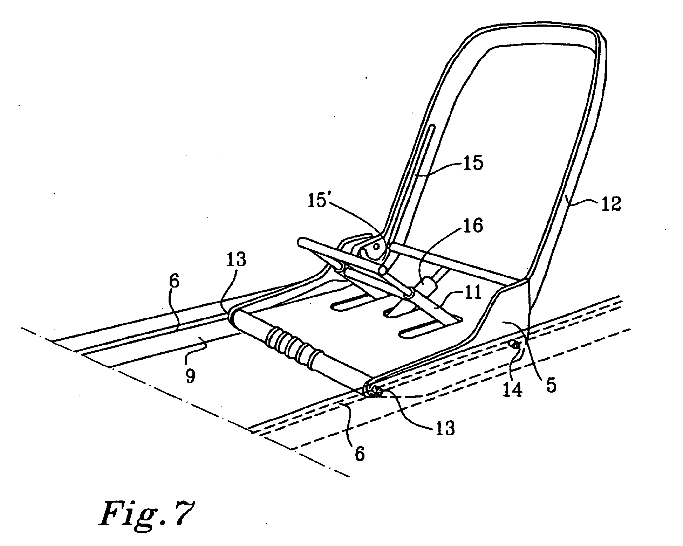

As seen in Fig. 7, the track 15 is provided with a J-shaped bend 15' at the end being closest to the base part 5. This shape of the track 15 allows for the seat arrangement to be folded to a storage position, in which the frame 12 with the back cushion 3 is folded forwardly while maintaining the seat cushion 2 in a position closer to horisontal so that the back cushion 3 and the seat cushion 2 will eventually meet. Thus, a storage position may be achieved in which the back cushion 3 is folded to a position close to horizontal, which is advantageous for freeing storage space in the vehicle.

Advantageously, the displacement of the seat cushion 2 is accompanied by a corresponding displacement of the pedals and possibly also a part of the floor of the vehicle.

The construction with the seat cushion 2 being movable in tracks 15 provided along opposing inner sides of a frame 12 is advantageous in that it allows for proper positioning to a belt-in-seat, and for a light and flexible construction of the seat arrangement. These advantages are in essential independent of whether the back cushion 3 may pass slightly through the frame 12 or not. However, if the back cushion 3 is arranged as described above in order to diminish whip-lash injury, the height adjustment possibility is particularly advantageous.

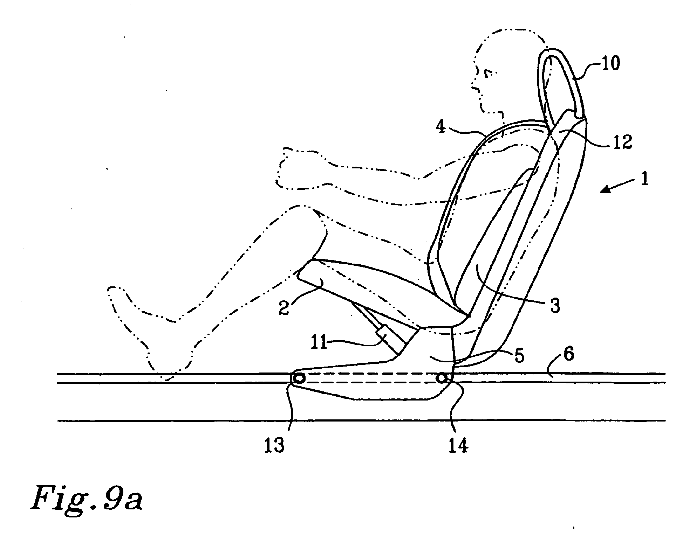

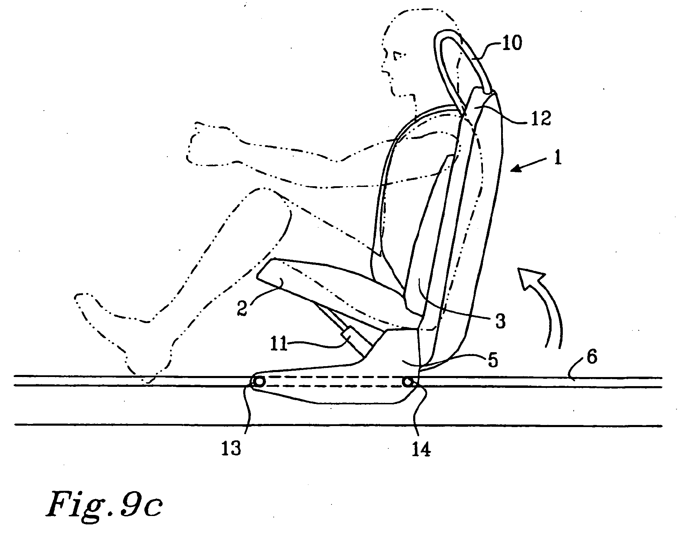

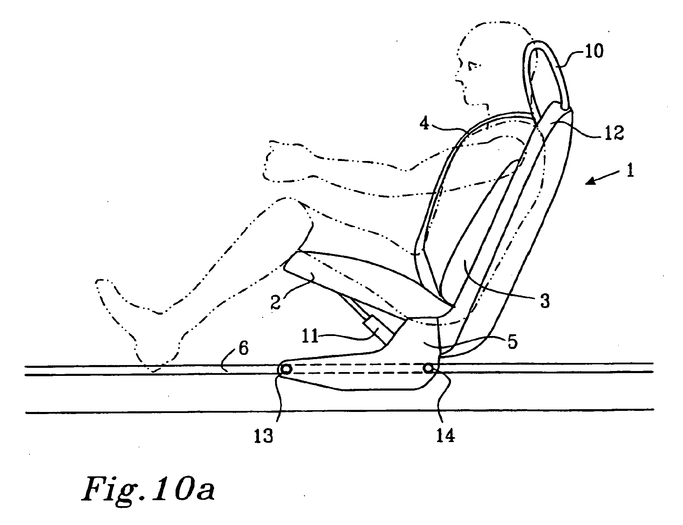

Turning now to Figs 9a to 9c, the behaviour of the second embodiment of a vehicle seat arrangement during a frontal crash is illustrated. In Fig. 10a, the vehicle arrangement comprising the seat part 1 and the base part 5 is depicted in an initial position before the crash occurs. An occupant is seated, supported by the seat cushion 2 and the back cushion 3 of the seat part 1, and surrounded by the belt-in-seat 4. The base part 5 is arranged in the rails 6, so that its first and second runners 13, 14 are arranged in the straight rails 6. In normal use, as in Fig. 10a, the seat part 1 may be adjusted between different comfort positions in that the angle between the seat part 1 and the base part 5 may be adjusted using the second energy absorber/linear actuator 8. Also, the angle between the seat cushion 2 and the back cushion 3 may be adjusted using the adjustor 11 (not shown in Figs 4-5, but visible in Figs 1 to 3). The seat arrangement may be vertically adjusted by adjusting the position of the seat cushion 2 using the height adjustment actuator 16, so that the occupant is suitably positioned in relation to the belt-in-seat 4. Further, the seat arrangement may be moved in a forward-backward direction in the rails 6.

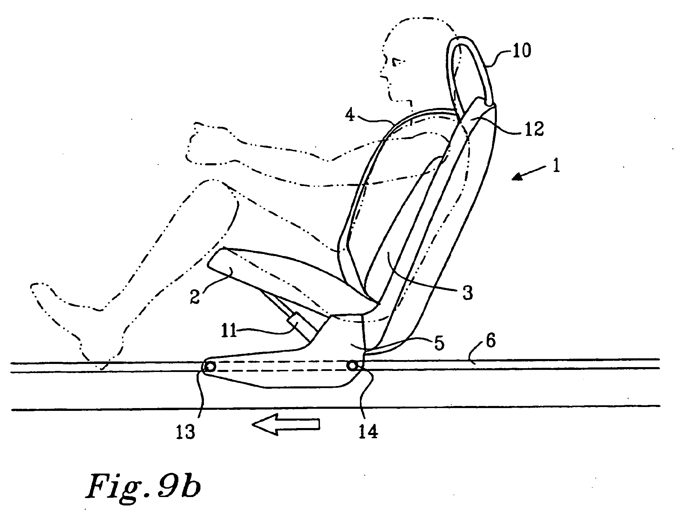

When a frontal impact occurs, the occupant will move forwardly in relation to the seat arrangement as seen in Fig. 9b, and will be held in place in they seat part 1 by the belt-in-seat 4 which is then subject to considerable loads. The load from the belt 4 will cause the base part 5 to move forwardly in the rails 6, whereby the first energy absorber 7 is compressed and thus absorbs energy from the crash. As the frontal impact proceeds, the seat part 1 will pivot forwardly in relation to the base part 5, whereby also the second energy absorber 8 will be compressed (See Fig. 8b), and thus absorb energy from the impact. The seat cushion 2 may initially be tilted upwardly, using the seat cushion actuator 11, so that the occupant assumes a backwardly tilted position, which is advantageous for the safety of the occupant since it diminishes the risk that the occupant slides forwardly in the seat (submarining). The tilting of the seat cushion 2 may be made for example in response to a signal from a frontal crash detecting sensor. The seat cushion 2 is in this example held with a fixed angle to the base part 5 during the crash, whereas the back cushion 3 is pivoted forwardly towards the base part 5 as the impact progresses. This may be accomplished by locking the seat cushion actuator 11 in position after the initial setting of the seat cushion's 2 angle with the base portion.

The seat cushion actuator 11 may if desired also be combined with an energy absorbing function.

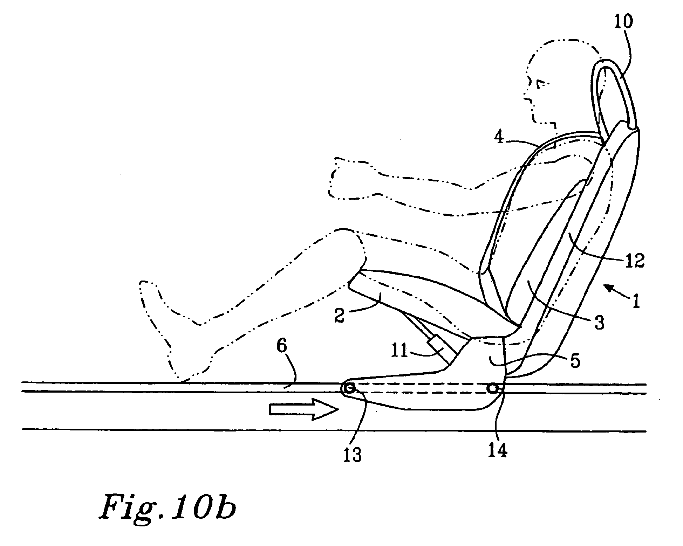

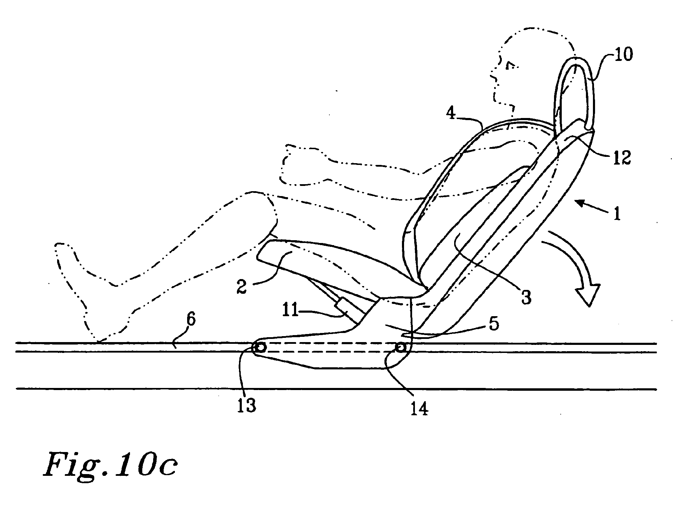

In case of a rear collision, as illustrated in Figs 10-10c, the initial position of the seat arrangement is similar to that described in relation to the frontal collision above. The rear collision will cause the base part 5 to move backwardly in the rails 6. Simultaneously, the first energy absorber 7 will be extended, and thereby absorb energy from the impact. As the impact progresses, the seat part 1 will pivot backwardly in relation to the base part 5 as seen in Fig. 10c. The second energy absorber 8 is extended, and thus absorbs energy from the impact. As the rear collision proceeds, the back cushion 3 of the seat part 1 will move backward and at least partly through the frame 12 formed by the seat part 1, as is clear from Fig. 10c. The neck support 10 is fixed in relation to the frame 5, which results in that the head of the occupant meets the neck support 10 as the back of the occupant moves partly through the frame 12 together with the back support 3. Thus the occupant is brought to a position which is favourable for avoiding whip-lash injuries.

Turning now to the first embodiment as exemplified in Figs 1 to 5, it has previously been mentioned that the back cushion 3 is pivotably arranged at an upper end thereof to the base part 5. As a general concept, there are advantages with having a vehicle seat arrangement comprising a back support surface for supporting the back of an occupant so that the back extends from a seat zone to a neck zone, and a base part 5 allowing adjustment of the back support surface between different positions. The neck zone should be located at a position in the vehicle which will allow an optimum field of vision for an occupant whose head and/or neck is supported at the neck zone of the seat arrangement. The seat zone is located at the lower portion of the back support, where the seat cushion 2 for supporting the seat of the occupant is arranged.

Advantageously, the back support surface may be adjustable between different angular positions about a pivot axis A being located at said neck zone.

Pivoting the back support about an axis being located at a neck zone allows for the shoulder or neck portion of the occupant to be kept in a substantially fixed position, regardless of the desired angle of the back support. By pivoting the back support surface, the occupant may select between different comfort positions, in which the pelvis of the occupant will be moved forward or backward while the head is kept still. The neck zone is preferably located in the vehicle so as to allow optimum field of vision for an occupant being seated in the seat arrangement with his/her head. In order to ensure maximum field of vision, the adjustment between different comfort positions should take place just below the head of the occupant. Ideally, one would want to keep the eyes of the occupant fixed, and make the adjustment around an axis extending at the eyes of the occupant. Since the relation between the neck zone and the eyes of an occupant will be about the same regardless of the occupants height, it is however a good approximation to allow pivoting about a pivot axis extending through the neck zone.

The advantages of this feature is independent of whether the seat arrangement is arranged in rails as described above or not, and whether the back cushion is suspended in a rail or not. Also, it is not necessarily used together with a belt-in-seat. However, as will be apparent in the following, it is particularly advantageous to combine these features.

Advantageously, the pivot axis A is substantially fixed in the horizontal plane, so that the head of an occupant may be kept from moving in forward-backward or left-right directions into positions that might diminish the field of vision.

The pivot axis may be vertically movable for vertical adjustment of the seat. Although this may appear contradictory to the object of optimising the field of vision, it might be suitable if the distance between the seat cushion and the pivot axis A is not adjustable. In this case, since shorter or taller occupants will position their heads at different locations in relation to the pivot axis A. Thus, a height adjustment may be done so as to position the head of the occupant at a height for optimum vision. If on the other hand the distance between the seat cushion and the pivot axis A is adjustable, it is preferable to keep the pivot axis A fixed in vertical directions, and instead adjust the seat cushion so that the head of each occupant is optimally positioned in relation to the pivot axis A.

The pivot axis A in the first embodiment is, due to the arrangement of the base part 5 in the slanted rails 6, substantially fixed in horizontal directions as has been described above. In order for the vehicle seat arrangement to function well for occupants having different heights, the problem of providing height adjustment while keeping the head of the occupant adjacent to the neck zone needs to be solved. In the embodiment shown in Fig. 1, the pivot axis A is vertically movable to vertical adjustment of the entire seat. However, one could envisage alternative solutions where instead the seat cushion 2 is movable in relation to the back cushion 3 and the pivot axis A.

In the embodiment of Fig. 1, the seat cushion 2 is thus arranged at a fixed distance from the pivot axis A, namely at a lower end of the back cushion 3. Occupants having different back length will thus position their heads at different locations in relation to the pivot axis A. A shorter person would perhaps be seated so that the eyes of the person are located at the same height as the pivot axis A, whereas a taller person would rather have their neck situated at the same height as the pivot axis A. These somewhat different positions are all suitable for the purpose of enhancing the viewing zone of the occupant, because pivoting the back support 1 between different comfort positions will not substantially effect the horizontal position of the head and the eyes of the occupant. The vertical position of the eyes may, as mentioned previously, be adjusted by vertical movement of the pivot axis A. In this embodiment, vertical movement of the pivot axis A is associated with vertical movement of the back cushion 3 and seat cushion 2.

As previously mentioned, the vehicle seat may comprise a neck support 10 for supporting the head of an occupant, the neck support 10 being arranged in a fixed relationship to the pivot axis A. Thus, the neck support 10 should not pivot with the back support surface when a comfort position is selected. Instead, the neck support 10 may maintain its vertical and angular position so as to enable the head of the occupant to be kept in a fixed position during adjustment between different comfort positions of the seat arrangement.

In one possible embodiment, the seat support portion may be vertically movable in relation to a pivot axis. This embodiment allows for adjustment to occupants of different heights, in which the head of the occupant may be held at a height permitting optimum field of vision while the seat support is adjusted to the length of the back of the occupant.

In another embodiment, the seat support portion may be arranged at a fixed distance from the pivot axis. In this embodiment it may be necessary to allow for some vertical movement of the pivot axis to adjust to all occupants. However, this embodiment has an advantage in that it allows for simple constructions of the seat arrangements, which will be described more in detailed in the description of preferred embodiments following below.

The seat suspension arrangement may preferably extend from a lower end portion being arranged adjacent to the vehicle floor to an upper end portion supporting the pivot axis, such that the back support is pivotable in relation to said suspension arrangement.

The two illustrated embodiments are described as examples only, and the person skilled in the art may clearly envisage alternative solutions in accordance with the invention. The outer shape of the base parts can be altered for different vehicle compartments and design ideas. Also the arrangement of energy absorbers and actuators may be varied. Seat and back cushions may have various shapes and sizes.

If the back cushion is arranged in a frame shaped structure extending around the back cushion so as to allow the back cushion to at least partly pass through the frame in an impact situation as described above, it should be understood that the frame shaped structure need not necessarily be an open frame. The back of the frame could be covered with some material, provided that this material is resilient enough so as to allow the back cushion to at least partly pass through the frame in an impact situation.

The neck zone as described above should be an area in which the neck of an occupant would be positioned when seated in the seat. Since there are occupants of different lengths, the neck zone will have an extension in a vertical direction. If the seat arrangement provides a back support surface for example in the form of a back cushion which extends from the seat cushion to a neck support area, the neck zone would not extend further down than to upper 50% of the length of the back support surface. Preferably the neck zone would not extend lower than the upper 30 %, and most preferred not lower the upper 25% of the back support surface. Most advantageous out of practical aspects would be to let the pivot axis A extend through the upper end of the back support, right where the neck support is ordinarily attached to the back support. However, the pivot axis A could also extend through the neck support itself. The neck support is by definition always located in the neck zone of the vehicle seat arrangement, if properly adjusted to the occupant.

## Claims

1. A vehicle seat arrangement comprising a seating part (1) having a seat cushion (2) and a back cushion (3) for supporting the seat and back of an occupant, and a seat belt (4) having anchor points, all of which being associated with the seating part, **characterised in that** said seating part (1) is pivotably arranged in relation to a base part (5), and the base part (5) is arranged to be horizontally movable in relation to the vehicle, wherein the pivoting between the seating part (1) and the base part (5), and the horizontal movement of the base part (5) in relation to the vehicle are independently controllable for enabling adjustment of the seating position under normal driving conditions, and for controlled horizontal movement and/or pivoting during absorption of energy in a crash situation.

2. A vehicle seat arrangement according to claim 1, wherein a first energy absorber and linear actuator (7) is arranged to operate upon the base part (5) so as to control the horizontal movement thereof.

3. A vehicle seat arrangement according to claim 1 or 2, wherein a second energy absorber and linear actuator (8) is arranged between the base part (5) and the seating part (1) so as to control the pivoting of the seating part (1) in relation to the base part (5).

4. A vehicle seat arrangement according to claims 2 and 3 in combination, wherein the first energy absorber and linear actuator (7) and the second energy absorber and linear actuator (8) are arranged substantially in parallel.

5. A vehicle seat arrangement according to any one of claims claim 2 to 4, wherein the first and/or second energy absorber and linear actuator (7, 8) is locked in position after absorption of energy, allowing movement/pivoting in one direction only following a crash situation.

6. A vehicle seat arrangement according to any one of the previous claims, wherein the base part (5) is horizontally movable in rails (6) extending on each side of the base part (5).

7. A vehicle seat arrangement according to claim 6, wherein said rails (6) are formed as grooves in walls (9) provided on each side of the base part (5).

8. A vehicle seat arrangement according to any one of the preceding claims wherein said base part (5) is a unitary member.

9. A vehicle seat arrangement according to any one of the preceding claims, wherein the seat cushion (2) is pivotable in relation to the back cushion (1) and an actuator (11) is arranged between the base part (5) and the seat cushion (2) so as to control adjustment of the angle formed between the seat cushion (2) and the back cushion (3).

10. A vehicle seat arrangement according to any one of the preceding claims, wherein said base part (5) is arranged so as to be movable in the rails (6) in a forward direction and in a backward direction in case of a backward or forward impact, respectively.

11. A vehicle seat arrangement according to any one of the preceding claims, wherein said rails (6) have at least one slanted portion extending in a horizontal and in a vertical direction so that movement along the portion of the rails (6) result in a horizontal and a vertical movement of the base part (5).

12. A vehicle seat arrangement according to any one of claims 1 to 10, wherein the rails (6) are extending in a substantially horizontal direction only.

13. A vehicle seat arrangement according to any one of the preceding claims, wherein said back cushion (3) is arranged in a frame shaped structure (12) extending around the back cushion (3), so as to allow the back cushion (3) to at least partly pass through the frame in an impact situation.

14. A vehicle seat arrangement according to any one of the preceding claims, wherein the vehicle seat arrangement comprises a neck support (10) being arrangable in a fixed relationship to the seat part (1).

## Patentansprüche

1. Fahrzeugsitzanordnung, umfassend einen Sitzteil (1) mit einem Sitzpolster (2) und einem Rückenpolster (3) zum Unterstützen des Sitzes und des Rückens eines Insassen und einen Sicherheitsgurt (4) mit Verankerungspunkten, die alle dem Sitzteil zugeordnet sind, **dadurch gekennzeichnet, dass** der Sitzteil (1) bezüglich eines Sockelteils (5) schwenkbar angeordnet ist, und dass der Sockelteil (5) so angeordnet ist, dass er gegenüber dem Fahrzeug horizontal beweglich ist, wobei das Schwenken zwischen dem Sitzteil (1) und dem Sockelteil (5) sowie die horizontale Bewegung des Sockelteils (5) gegenüber dem Fahrzeug unabhängig voneinander steuerbar sind, um das Einstellen der Sitzposition unter normalen Fahrbedingungen sowie eine kontrollierte horizontale Bewegung und/oder ein kontrolliertes Schwenken während des Aufnehmens von Energie in einer Aufprallsituation zu ermöglichen.

2. Fahrzeugsitzanordnung nach Anspruch 1, **dadurch gekennzeichnet, dass** ein erster Energieabsorber und Linearaktuator (7) so angeordnet ist, dass er auf den Sockelteil (5) wirkt, um so dessen horizontale Bewegung zu steuern.

3. Fahrzeugsitzanordnung nach einem der Ansprüche 1 oder 2, **dadurch gekennzeichnet, dass** ein zweiter Energieabsorber und Linearaktuator (8) zwischen dem Sockelteil (5) und dem Sitzteil (1) angeordnet ist, um so das Schwenken des Sitzteils (1) gegenüber dem Sockelteil (5) zu steuern.

4. Fahrzeugsitzanordnung nach Ansprüchen 2 und 3 in Kombination, **dadurch gekennzeichnet, dass** der erste Energieabsorber und Linearaktuator (7) und der zweite Energieabsorber und Linearaktuator (8) im wesentlichen parallel zueinander angeordnet sind.

5. Fahrzeugsitzanordnung nach einem der Ansprüche 2 bis 4, **dadurch gekennzeichnet, dass** der erste und/oder zweite Energieabsorber und Linearaktuator (7, 8) nach der Absorption von Energie in einer Position verriegelt ist und so nach einer Aufprallsituation nur das Bewegen/Schwenken in einer Richtung erlaubt.

6. Fahrzeugsitzanordnung nach einem der vorhergehenden Ansprüche, **dadurch gekennzeichnet, dass** der Sockelteil (5) in Schienen (6), die sich auf jeder Seite des Sockelteiles (5) erstrecken, horizontal beweglich ist.

7. Fahrzeugsitzanordnung nach Anspruch 6, **dadurch gekennzeichnet, dass** die Schienen (6) als Rillen in Wänden (9) auf jeder Seite des Sockelteils (5) ausgebildet sind.

8. Fahrzeugsitzanordnung nach einem der vorhergehenden Ansprüche, **dadurch gekennzeichnet, dass** der Sockelteil (5) ein einstückiges Bauteil ist.

9. Fahrzeugsitzanordnung nach einem der vorhergehenden Ansprüche, **dadurch gekennzeichnet, dass** das Sitzpolster (2) gegenüber dem Rückenpolster (1) schwenkbar ist und dass zwischen dem Sockelteil (5) und dem Sitzpolster (2) ein Aktuator (11) angeordnet ist, um so den zwischen dem Sitzpolster (2) und dem Rückenpolster (3) gebildeten Winkel zu steuern.

10. Fahrzeugsitzanordnung nach einem der vorhergehenden Ansprüche, **dadurch gekennzeichnet, dass** der Sockelteil (5) so angeordnet ist, dass er nach vorne und nach hinten beweglich ist, im Fall eines rückwärtigen beziehungsweise eines vorwärtigen Aufpralls.

11. Fahrzeugsitzanordnung nach einem der vorhergehenden Ansprüche, **dadurch gekennzeichnet, dass** die Schienen (6) wenigstens einen geneigten Abschnitt umfassen, der sich in einer horizontalen und in einer vertikalen Richtung erstreckt, so dass eine Bewegung entlang des Abschnitts der Schienen (6) zu einer horizontalen und einer vertikalen Bewegung des Sockelteils (5) führt.

12. Fahrzeugsitzanordnung nach einem der Ansprüche 1 bis 10, **dadurch gekennzeichnet, dass** sich die Schienen (6) nur in einer im wesentlichen horizontalen Richtung erstrecken.

13. Fahrzeugsitzanordnung nach einem der vorhergehenden Ansprüche, **dadurch gekennzeichnet, dass** das Rückenpolster (3) in einer rahmenförmigen Struktur (12) angeordnet ist, die sich um das Rückenpolster (3) herum erstreckt, um so zu ermöglichen, dass das Rückenpolster (3) in einer Aufprallsituation wenigstens teilweise durch den Rahmen tritt.

14. Fahrzeugsitzanordnung nach einem der vorhergehenden Ansprüche, **dadurch gekennzeichnet, dass** die Fahrzeugsitzanordnung eine Nackenstütze (10) umfasst, die in einer festliegenden Beziehung gegenüber dem Sitzteil (1) angeordnet werden kann.

## Revendications

1. Unité de siège de véhicule comprenant une partie formant un siège (1) avec un coussin (2) de siège et un coussin de dossier (3) pour supporter le postérieur et le dos d'un occupant, et une ceinture de sécurité (4) ayant des points d'ancrage qui sont tous associés à la partie formant siège, ***caractérisée en ce que*** ladite partie formant siège (1) est montée pivotante en relation avec une partie formant base (5), et la partie formant base (5) est prévue pour être mobile horizontalement par rapport au véhicule, le pivotement entre la partie formant siège (1) et la partie formant base (5), et le mouvement horizontal de la partie formant base (5) par rapport au véhicule sont contrôlables de manière indépendante pour permettre le réglage de la position assise dans des conditions de conduite normales, et le mouvement horizontal contrôlé et/ou le pivotement pendant l'absorption d'énergie lors d'une situation de choc.

2. Unité de siège de véhicule selon la revendication 1, dans laquelle un premier vérin (7) absorbeur d'énergie et linéaire est agencé de manière à agir sur la partie formant base (5) afin d'en contrôler le mouvement horizontal.

3. Unité de siège de véhicule selon la revendication 1 ou 2, dans laquelle un deuxième vérin (8) absorbeur d'énergie et linéaire est placé entre la partie formant base (5) et la partie formant siège (1) de manière à contrôler le pivotement de la partie formant siège (1) par rapport à la partie formant base (5).

4. Unité de siège de véhicule selon les revendications 2 et 3 associées, dans laquelle le premier vérin (7) absorbeur d'énergie et linéaire et le deuxième vérin (8) absorbeur d'énergie et linéaire sont placés de manière sensiblement parallèle.

5. Unité de siège de véhicule selon l'une quelconque des revendications 2 à 4, dans laquelle le premier et/ou le deuxième vérins (7, 8) absorbeurs d'énergie et linéaires sont bloqués en position après une absorption d'énergie, permettant le mouvement/pivotement dans une direction seulement à la suite d'une situation de choc.

6. Unité de siège de véhicule selon l'une quelconque des revendications précédentes, dans laquelle la partie formant base (5) est mobile horizontalement dans des rails (6) s'étendant sur chaque côté de la partie formant base (5).

7. Unité de siège de véhicule selon la revendication 6, dans laquelle lesdits rails (6) sont réalisés sous forme de rainures dans des parois (9) présentes sur chaque côté de la partie formant base (5).

8. Unité de siège de véhicule selon l'une quelconque des revendications précédentes, dans laquelle ladite partie formant base (5) est un élément unitaire.

9. Unité de siège de véhicule selon l'une quelconque des revendications précédentes, dans laquelle le coussin (2) de siège est monté pivotant par rapport au coussin de dossier (1) et un actionneur (11) est placé entre la partie formant base (5) et le coussin (2) de siège de manière à contrôler le réglage de l'angle formé entre le coussin (2) de siège et le coussin de dossier (3).

10. Unité de siège de véhicule selon l'une quelconque des revendications précédentes, dans laquelle ladite partie formant base (5) est prévue de manière à être mobile dans les rails (6) dans une direction avant et dans une direction arrière en cas, respectivement, de choc vers l'arrière ou vers l'avant.

11. Unité de siège de véhicule selon l'une quelconque des revendications précédentes, dans laquelle lesdits rails (6) ont au moins une portion inclinée s'étendant dans une direction horizontale et dans une direction verticale de telle sorte qu'un déplacement le long de la portion des rails (6) ait pour résultat un déplacement horizontal et vertical de la partie formant base (5).

12. Unité de siège de véhicule selon l'une quelconque des revendications 1 à 10, dans laquelle les rails (6) s'étendant uniquement dans une direction sensiblement horizontale.

13. Unité de siège de véhicule selon l'une quelconque des revendications précédentes, dans laquelle ledit coussin de dossier (3) est placé dans une structure (12) conformée en armature s'étendant autour du dossier (3) de façon à permettre au coussin de dossier (3) de passer au moins partiellement à travers l'armature (12) lors d'une situation de choc.

14. Unité de siège de véhicule selon l'une quelconque des revendications précédentes, dans laquelle l'unité de siège de véhicule comprend un support (10) pour la nuque pouvant être placé en relation fixe par rapport à la partie formant siège (1).
